# FASCICULE DE BREVET EUROPEEN

(11) **EP 3 560 043 B1**
(45) Date de publication et mention de la délivrance du brevet: **29.04.2026**
(21) Numéro de dépôt: 17816852.2
(22) Date de dépôt: 18.12.2017
(51) Int. Cl.: H01R 9/05, H01R 11/09, H01R 4/64, H01R 4/18

(54) **ENSEMBLE ÉLECTRIQUE POUR UN VÉHICULE AUTOMOBILE COMPORTANT UN CÂBLE COAXIAL ET UNE COSSE ÉLECTRIQUE**
ELEKTRISCHE ANORDNUNG FÜR EIN KRAFTFAHRZEUG MIT EINEM KOAXIALKABEL UND ELEKTRISCHE ANSCHLUSSKLEMME
ELECTRICAL ASSEMBLY FOR A MOTOR VEHICLE COMPRISING A COAXIAL CABLE AND AN ELECTRICAL TERMINAL

(30) Priorité: 20.12.2016 FR 1662947
(43) Date de publication de la demande: 30.10.2019
(73) Titulaire: Renault s.a.s, 92100 Boulogne Billancourt (FR)
(72) Inventeur: LEFEBVRE, Nicolas, 76120 Le Grand Quevilly (FR); FELIX, Nicolas, 78370 Plaisir (FR)
(74) Mandataire: Renault Group
(86) Numéro de dépôt international: PCT/EP2017/083361
(87) Numéro de publication internationale: WO 2018/114831

(56) Documents cités:
- EP-A1- 1 863 129
- JP-A- 2005 044 662
- JP-A- 2005 044 662
- JP-U- S55 131 070
- US-A1- 2006 189 184
- US-A1- 2006 189 184
- US-A1- 2008 266 198
- US-A1- 2008 266 198
- US-A1- 2010 112 858
- US-A1- 2010 112 858
- US-B1- 6 297 447
- US-B1- 6 297 447

## Description

### DOMAINE TECHNIQUE AUQUEL SE RAPPORTE L'INVENTION

La présente invention concerne de manière générale le domaine de l'électronique dans l'automobile.

Elle présente une cosse électrique de mise à la masse par sertissage sur un blindage de câble coaxial qui est destiné à être raccordé à une antenne de véhicule automobile et qui est adapté à transporter un signal électrique transmis par cette antenne.

Elle concerne un ensemble électrique pour un véhicule automobile comportant une telle cosse électrique, au moins un câble coaxial et/ou un dispositif de fixation et de connexion électrique d'une telle cosse au châssis d'un véhicule automobile.

Elle concerne enfin un véhicule automobile comportant au moins une antenne et un tel ensemble électrique.

### ARRIERE-PLAN TECHNOLOGIQUE

Actuellement, les véhicules automobiles comportent de une à trois antennes de réception de signaux électromagnétiques. La juxtaposition de plusieurs antennes, dont le nombre est généralement choisi en fonction du niveau de gamme du véhicule, permet d'améliorer la qualité de la réception des signaux électromagnétiques.

Les véhicules comportent alors de un à trois câbles coaxiaux qui permettent de connecter chacune de ces antennes à un appareil électrique, typiquement à un poste radio ou à un instrument multimédia de communication de son et d'images dans le véhicule.

Un câble coaxial comprend classiquement, de l'intérieur vers l'extérieur, une âme conductrice, une gaine isolante interne qui recouvre l'âme conductrice, une tresse de masse conductrice (ou « blindage ») qui recouvre la gaine isolante interne, et une gaine isolante externe qui recouvre la tresse de masse.

On constate actuellement que la réception des signaux électriques au niveau du poste radio peut ne pas atteindre les niveaux de prestation que l'on souhaiterait, du fait notamment de perturbations électromagnétiques qui brouillent les signaux transportés par les câbles coaxiaux.

Les publications US-2010 112858A1 et US-2006 189184A1 divulguent des ensembles électriques pour câbles coaxiaux comprenant une cosse possédant des oreilles pour sertir une partie dénudée du blindage de câble coaxial.

### OBJET DE L'INVENTION

Afin de remédier à l'inconvénient précité de l'état de la technique, la présente invention propose une solution qui permet de réduire ces perturbations électromagnétiques sans pour autant nécessiter l'ajout d'un composant électronique.

Plus particulièrement, on propose selon l'invention un ensemble électrique tel que défini par la revendication 1.

La demanderesse a constaté que les perturbations électromagnétiques généraient dans le câble coaxial des courants résiduels, lesquels perturbaient les signaux reçus par le poste radio. Elle a également constaté qu'en connectant à la masse du véhicule une partie intermédiaire de la tresse de masse (c'est-à-dire une partie de la tresse de masse qui est située à distance des extrémités du câble coaxial), il était possible de réduire très fortement les perturbations électromagnétiques brouillant les signaux.

L'invention concerne ainsi un ensemble électrique pour un véhicule automobile comportant une cosse électrique dont les oreilles sont repliées, et au moins deux câbles coaxiaux présentant, à distance de leurs extrémités, une portion dénudée sertie dans le fût de sertissage, entre lesdites oreilles.

Au moyen de plusieurs couples d'oreilles, l'ensemble électrique selon la présente invention permet alors de faire une « reprise de masse » sur le blindage de plusieurs câbles coaxiaux afin d'améliorer la qualité des signaux reçus dans les fréquences souhaitées.

L'architecture de l'ensemble électrique selon la présente invention est en outre très simple, si bien qu'elle est facilement industrialisable pour un coût de revient très réduit.

L'utilisation d'au moins deux fûts de sertissage parallèles permet de connecter au moins deux câbles coaxiaux à la même cosse.

L'utilisation de la méthode du sertissage pour connecter le blindage à la cosse assure en outre une bonne connexion électrique qui permet de faire fuir efficacement les courants parasites vers le point de masse du véhicule.

Le sertissage du câble coaxial pourra préférentiellement être réalisé avec un moyen semi-automatique tel qu'une pince automatisée, en mode séquentiel, afin d'avoir le contrôle de la conformité de sertissage de chaque câble coaxial.

D'autres caractéristiques avantageuses et non limitatives de l'ensemble électrique selon la présente invention sont les suivantes :
- en position repliée, lesdites oreilles de chaque couple sont repliées selon deux segments parallèles et s'étendent dans deux plans sensiblement parallèles, à 20 degrés près ;
- ledit corps comporte, de part et d'autre de l'une première au moins des deux oreilles de chaque couple, deux languettes qui sont découpées dans ledit corps et qui sont adaptées à être repliées du premier côté dudit corps ;
- en position repliée, lesdites languettes sont repliées selon deux segments d'axes confondus avec l'axe du segment de la première oreille ;
- il est prévu des moyens de fixation audit véhicule automobile, qui sont découpées dans ledit corps ;
- il est prévu exactement trois couples d'oreilles qui sont découpées dans ledit corps et qui sont adaptées à être repliées du premier côté dudit corps pour former d'autres fûts de sertissage destinés à accueillir des portions dénudées d'autres câbles coaxiaux ; et
- les fûts de sertissage adjacents présentent des axes moyens espacés d'une distance comprise entre 10 et 30 millimètres.

L'invention concerne enfin un véhicule automobile tel que défini par la revendication 10.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique d'une partie d'un châssis de véhicule automobile, sur lequel est fixée un ensemble électrique conforme à l'invention ;
- la figure 2 est une vue schématique en coupe d'un câble coaxial et d'une partie de la cosse de la figure 1 ;
- les figures 3 à 5 sont des vues schématiques en plan de la cosse de la figure 1, dans laquelle sont respectivement sertis un, deux et trois câbles coaxiaux ;
- la figure 6 est une vue schématique en perspective de la cosse de la figure 1 ;
- la figure 7 est une vue schématique en perspective d'une partie de fixation et de connexion électrique adapté à accueillir la cosse de la figure 6 ;
- la figure 8 est une vue schématique en perspective d'une variante de réalisation de la cosse de la figure 1 ; et
- la figure 9 est une vue schématique en perspective d'une variante de réalisation de la partie de fixation et de connexion électrique de la figure 7.

En préambule, on notera que les éléments identiques ou similaires des différentes variantes de réalisation représentées sur les différentes figures seront référencés par les mêmes signes de référence et ne seront pas décrits à chaque fois.

Un véhicule automobile comporte généralement un poste-radio et une ou plusieurs antennes de réception de signaux électromagnétiques. Ces antennes permettent de transformer les signaux électromagnétiques captés en des signaux électriques, afin que le poste-radio puisse recevoir la radio dans différentes fréquences, notamment dans les bandes AM (centrée sur 765 kHz), FM (comprise entre 87,5 et 108 MHz) et DAB (par exemple comprise entre 174 et 240 MHz).

Le nombre d'antenne(s) équipant un véhicule automobile est généralement égal à un, deux ou trois.

Pour diffuser non seulement du son mais aussi des images ou communiquer des données numériques à partir d'un appareil multimédia, le nombre d'antennes peut aller au-delà de trois.

Chacune de ces antennes est connectée au poste-radio via un câble coaxial.

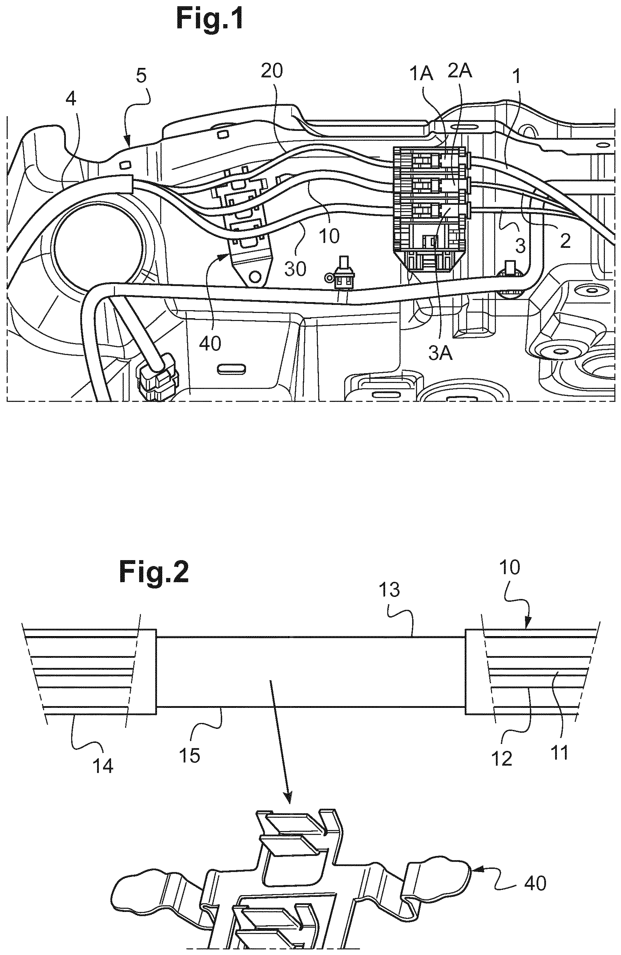

Comme le montre la figure 2, un tel câble coaxial 10 comprend classiquement, de l'intérieur vers l'extérieur, une âme conductrice 11, une gaine isolante interne 12 qui recouvre l'âme conductrice 11, une tresse de masse conductrice (ou « blindage 13 ») qui recouvre la gaine isolante interne, et une gaine isolante externe 14 qui recouvre le blindage 13. Ce câble coaxial présente un diamètre extérieur compris entre 2 et 4,8 millimètres.

Comme le montre la figure 1, le véhicule automobile ici considéré comporte un châssis métallique 5 (qui forme la masse du véhicule), et trois antennes (non représentées) connectées au poste-radio (non représenté) via trois câbles coaxiaux 10, 20, 30 identiques et distincts. Ces trois câbles coaxiaux 10, 20, 30 sont tous issus d'un même fourreau 4 et ils présentent chacun une extrémité d'entrée connectée à l'une des antennes, et une extrémité de sortie connectées à une borne 1A, 2A, 3A de connexion électrique équipant le véhicule automobile. Chacune de ces bornes 1A, 2A, 3A est alors connectée au poste-radio directement ou, comme c'est ici le cas, indirectement via une autre partie 1, 2, 3 de câble d'antenne.

Pour permettre d'évacuer les courants résiduels circulant dans le blindage 13, la présente invention propose de connecter une partie intermédiaire du blindage de chaque câble coaxial 10, 20, 30 au châssis métallique 5 du véhicule automobile.

Par « partie intermédiaire », on entend une partie située à distance des extrémités du câble coaxial considéré. La position de cette partie intermédiaire est notamment choisie de telle sorte que sa distance aux bornes 1A, 2A, 3A est comprise entre 50mm et 500mm.

Pour évacuer ces courants résiduels facilement, la présente invention propose de dénuder la gaine isolante externe de chaque câble coaxial au niveau de la partie intermédiaire, et d'utiliser une cosse électrique 40 en la connectant à cette partie dénudée 15 (voir figure 2).

En mettant au potentiel de masse un tronçon du blindage du câble coaxial qui est éloigné de l'antenne, l'invention permet de disposer l'antenne sur toute partie du véhicule en matériau électriquement isolant sans structure métallique proche, comme par exemple un tableau de bord ou un ouvrant, notamment un hayon de coffre arrière réalisé en matériau synthétique pour alléger le véhicule et ainsi en réduire la consommation, et par conséquent les émissions de gaz indésirables. La mise au potentiel de masse en partie intermédiaire permet aussi de ne pas amener de courants parasites susceptibles d'apparaitre dans le blindage trop près de la connexion à un appareil de réception électronique auquel l'autre extrémité du câble est connectée.

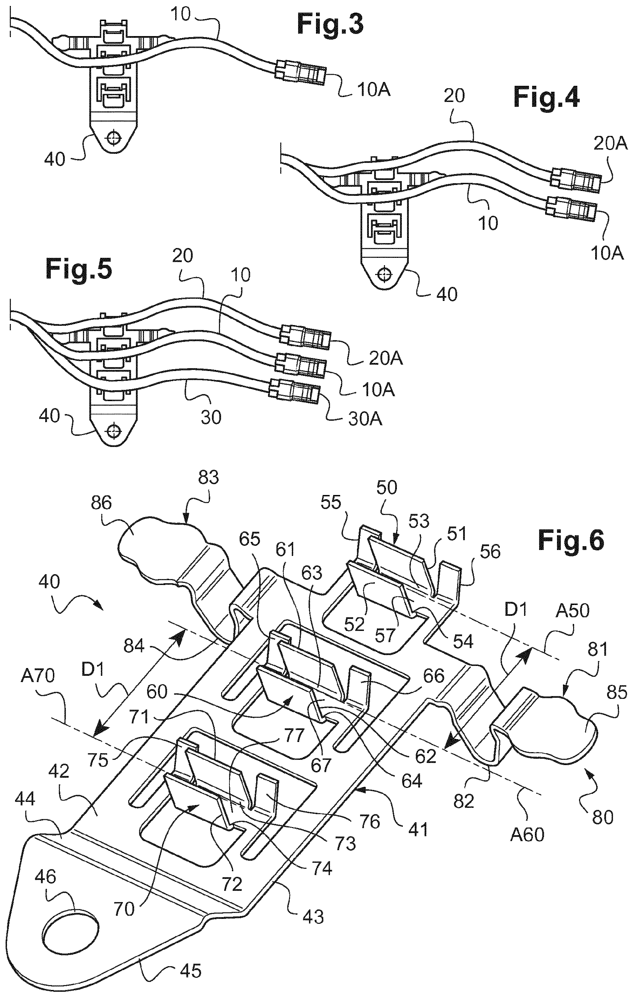

Un exemple de réalisation de la cosse 40 est représenté en détail sur la figure 6.

Comme cela apparaît sur cette figure, la cosse 40 est formée d'une seule pièce en matière électriquement conductrice, par exemple en cuivre ou en acier. Elle est ici formée par découpe et pliage d'un feuillard métallique.

Cette cosse comporte donc un corps 41 qui correspond à ce qui reste du feuillard métallique une fois que ce dernier a été découpé.

Sur la figure 6, ce corps 41 est représenté à l'état plié. Bien entendu, il pourra être livré à l'état non plié (donc plat), le pliage restant à la charge du constructeur du véhicule automobile ou du câbleur. On notera que la structure monobloc du corps 41 ici représenté pour plus d'un câble, facilite le montage sur le véhicule en évitant d'avoir à manipuler plusieurs pièces. La structure monobloc assure aussi une meilleure continuité électrique, bien utile notamment pour les hautes fréquences.

On définit ici deux côtés par rapport à ce corps 41, un côté avant situé du côté de l'une première des deux faces 42 du corps 41, et un côté arrière opposé.

Selon une caractéristique particulièrement avantageuse de l'invention, ce corps 41 comporte deux parties essentielles, à savoir :
- un moyen de raccordement 46 adapté à raccorder électriquement le corps 41 au châssis 5 du véhicule automobile, et
- plusieurs couples de deux oreilles 51, 52 qui sont découpées dans le corps 41 et qui sont repliées l'une vers l'autre, du côté avant, afin de délimiter entre eux un fût de sertissage 50 destiné à accueillir la portion dénudée 15 du câble coaxial 10.

Ici, puisque la cosse 40 est prévue pour être utilisée avec trois câbles coaxiaux 10, 20, 30, le corps 41 comporte alors exactement trois couples identiques de deux oreilles 51, 52 ; 61, 62 ; 71, 72 qui délimitent trois fûts de sertissage 50, 60, 70. Chaque fût de sertissage est ici orienté selon un axe moyen A50, A60, A70.

En pratique, chaque oreille se présente sous la forme d'une plaquette rectangulaire qui présente trois bords libres et un quatrième bord rattaché au reste du corps 41.

Les oreilles 51, 52 ; 61, 62 ; 71, 72 de chaque couple sont repliées vers l'avant, sensiblement à angle droit, selon deux segments 53, 54 ; 63, 64 ; 73, 74 parallèles.

Avant de recevoir les câbles coaxiaux, les deux oreilles de chaque couple peuvent être repliées en position d'attente, dans des plans non parallèles de façon à former un dièdre ouvert vers l'avant (ce qui facilite l'engagement des câbles coaxiaux entres les oreilles).

Une fois les câbles coaxiaux engagés, les deux oreilles de chaque couple sont repliées dans des plans sensiblement parallèles, à 20 degrés près, pour sertir la partie dénudée 15 de chaque câble coaxial 10, 20, 30.

Dans le mode de réalisation représenté sur la figure 6, le corps 41 comporte ici une partie principale 43 rectangulaire qui présente deux ouvertures dans lesquelles sont découpées respectivement deux des trois couples d'oreilles 61, 62 ; 71, 72, et un bord d'extrémité au niveau duquel est découpé le troisième couple d'oreilles 51, 52. La partie principale 43 est de préférence monobloc commun à au moins deux couples d'oreilles 61, 62 ; 71, 72 pour garantir une meilleure équipotentielle entre les couples d'oreilles.

Chaque couple d'oreilles se rattache à une embase rectangulaire 57, 67, 77 qui s'étend dans le plan de la partie principale 43, de telle façon que les deux oreilles présentent avec leur embase une section transversale en forme de U.

On observe ici sur la figure 6 que chaque embase 57, 67, 77 est raccordée à la partie principale 43 du corps 41 de la cosse 40 par deux bras qui présentent, avec l'embase 57, 67, 77 correspondante, une forme de U.

Les couples d'oreilles 51, 52 ; 61, 62 ; 71, 72 sont ici répartis de telle manière que les axes moyens A50, A60, A70 des fûts de sertissage 50, 60, 70 s'étendent sensiblement parallèlement les uns aux autres et que les axes moyens des fûts de sertissage adjacents (A50, A60 et A60, A70) sont écartés d'une distance D1 comprise entre 10 et 30 millimètres.

Par « sensiblement parallèlement », on entend que les axes sont soit strictement parallèles et distincts, soit inclinés d'un angle inférieur à 20 degrés.

Pour assurer un meilleur guidage des câbles coaxiaux 10, 20, 30 dans leurs fûts de sertissage 50, 60, 70, il est prévu que le corps 41 comporte, de part et d'autre de l'une au moins des oreilles 51, 61, 71 de chaque couple, deux languettes 55, 56 ; 65,66 ; 75, 76 qui sont découpées dans le corps 41 et qui sont repliées vers l'avant, avec un angle inférieur à l'angle d'inclinaison des oreilles 51, 61, 71.

La gaine isolante externe de chaque câble coaxial 10, 20, 30 est alors prévue pour s'appuyer contre ces languettes 55, 56 ; 65,66 ; 75, 76 (de part et d'autre de la partie dénudée 15), de telle façon que les câbles coaxiaux ne puissent pas se courber exagérément, ce qui évite tout déchirement du blindage 13.

Les deux languettes 55, 56 ; 65,66 ; 75, 76 bordant chaque oreille s'étendent plus précisément à partir de l'embase 57, 67, 77 correspondante, et sont reliées à celle-ci par des segments d'axes confondus avec l'axe du segment 53, 63, 73 de cette même oreille 51. Autrement formulé, l'oreille et les deux languettes qui la bordent sont repliées selon une même ligne de pliure, ce qui réduit les coûts de fabrication de la cosse 40.

La cosse 40 peut être livrée seule au fabricant du véhicule automobile, ou elle peut être livrée avec un ou plusieurs câbles coaxiaux. Ainsi, comme le montrent les figures 3 à 5, la cosse 40 peut être livrée avec au choix :
- un câble coaxial 10 dont une partie intermédiaire aura été dénudée puis sertie entre deux oreilles de la cosse 40, et dont une extrémité portera un connecteur 10A à engager dans l'une des bornes 1A, 2A, 3A précitées (figure 3),
- deux câbles coaxiaux 10, 20 présentant chacun une partie intermédiaire dénudée et sertie entre l'un des couples d'oreilles de la cosse, et une extrémité portant un connecteur 10A, 20A à engager dans deux des bornes 1A, 2A, 3A précitées (figure 4),
- trois câbles coaxiaux 10, 20, 30 présentant chacun une partie intermédiaire dénudée et sertie entre l'un des couples d'oreilles de la cosse, et une extrémité portant un connecteur 10A, 20A, 30A à engager dans l'une des bornes 1A, 2A, 3A précitées (figure 5).

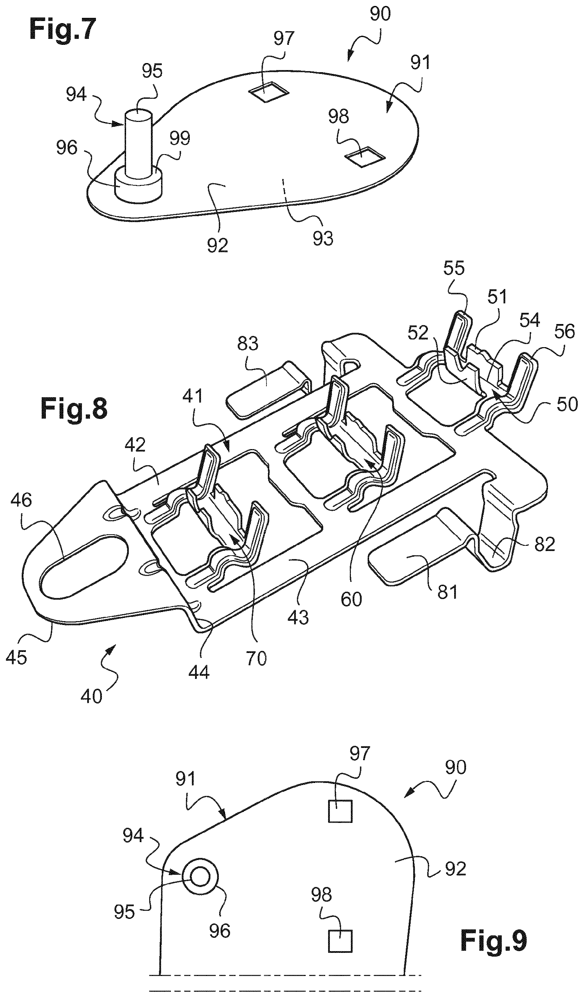

Pour faciliter la fixation et la connexion électrique de la cosse 40 au châssis 5 du véhicule automobile, il est prévu que ce dernier comporte une partie de fixation et de connexion électrique 90 telle que celle représentée sur la figure 7.

Cette partie de fixation et de connexion électrique 90, ci-après appelée « fiche d'interface », est représentée comme comportant une embase 91 dont le contour présente une forme ovoïde. En pratique, cette embase appartient au châssis et la forme du contour correspond à une découpe aléatoire du châssis sans existence réelle, mais simplement pour la compréhension de la figure. En d'autres termes la partie de fixation et de connexion 90 peut très bien faire partie intégrante du châssis métallique du véhicule sans se limiter au contour représenté sur la figure.

Cette fiche d'interface 90 pourra si besoin être réalisée par exemple en matière métallique et être recouverte d'une peinture isolante. En variante, la matière utilisée pour fabriquer la fiche d'interface 91 pourrait être différente.

Pour la fixation et la connexion électrique de la cosse 40, la fiche d'interface 90 comporte, d'une part, un goujon de masse 94 à engager au travers d'une ouverture 46 prévue dans le corps 41 de la cosse 40, et, d'autre part, des moyens d'assujettissement 97, 98 adaptés à coopérer avec des moyens de fixation 80 correspondants de la cosse 40.

Ici, le goujon de masse 94 s'élève à partir de la face avant 92 de l'embase 91 (c'est*-à-dire du châssis), orthogonalement à celle-ci. Il présente un rétrécissement de section, si bien qu'il présente une partie inférieure 96 cylindrique de révolution présentant un premier diamètre, et une partie supérieure 95 cylindrique de révolution présentant un second diamètre inférieur au premier. Le décroché entre ces deux parties délimite une face de butée 99 de forme annulaire. Ce goujon de masse 94 est connecté au châssis 5 du véhicule par une opération d'enchâssement ou de soudure.

En correspondance, comme le montre la figure 6, la partie principale 43 du corps 41 de la cosse 40 porte, sur l'un de ses bords, une partie 44 inclinée (ou orthogonale) par rapport à la partie principale 43, qui porte elle-même une bride 45. Cette bride 45 s'étend dans un plan parallèle à celui de la partie principale 43 du corps 41. L'écart entre ces deux plans est égal à la hauteur de la partie inférieure 96 du goujon de masse 90. L'ouverture 46 à engager sur le goujon de masse 90 est alors prévue dans cette bride 45. Elle est située de telle manière que l'axe passant par le centre de l'ouverture 46 et par le centre des oreilles est orthogonal aux axes moyens A50, A60, A70. De cette façon, une fois la cosse 40 installée sur le dispositif de fixation et de connexion électrique 90, le goujon de masse 94 ne forme pas obstacle au passage des câbles coaxiaux 10, 20, 30. Ici, l'ouverture 46 est circulaire et elle présente un diamètre égal, au jeu de montage près, au diamètre de la partie supérieure 95 du goujon de masse 90.

En variante, comme le montre la figure 8, cette ouverture 46 pourrait présenter une forme oblongue, de largeur égale, au jeu de montage près, au diamètre de la partie supérieure 95 du goujon de masse 90, et de longueur strictement supérieure (de façon à nécessiter une précision de découpe de la cosse 40 moindre et donc à réduire les coûts). Quoi qu'il en soit, une fois l'ouverture 46 engagée sur le goujon de masse 90, il est prévu que la face arrière de la bride 45 s'applique contre la face de butée 99 du goujon de masse 90 de façon à établir une bonne connexion électrique entre ces deux éléments.

Comme le montre bien la figure 7, la fiche d'interface 90 présente par ailleurs, en guise de « moyens d'assujettissement », deux ouvertures rectangulaires 97, 98 situées côte à côte, à égale distance du goujon de masse 90.

Comme le montre bien la figure 6, le corps 41 de la cosse 40 comporte en correspondance, en guise de « moyens de fixation 80 », deux bras 81, 83 qui s'étendent dans des directions opposées, à partir de deux bords opposés de la partie principale 43 du corps 41 de la cosse 40.

Chacun de ces deux bras 81, 83 comporte une extrémité libre 85, 86 plane s'étendant dans le plan de la partie principale 43 du corps 41 de la cosse 40. Cette extrémité libre forme une sorte de levier permettant de manipuler aisément les bras afin de les faire fléchir.

Chacun de ces deux bras 81, 83 comporte par ailleurs, entre son extrémité libre 85, 86 et la partie principale 43 du corps 41 de la cosse 40, une partie repliée 82, 84 globalement en U vers l'arrière, qui forme une sorte de lame-ressort à encliqueter dans l'ouverture 97, 98 correspondante de la fiche d'interface 90. Pour cela, la partie repliée 82, 84 de chaque bras 81, 83 se rattache à l'extrémité libre 85, 86 du bras et à la partie principale 43 du corps 41 de la cosse 40 par des extrémités incurvées l'une vers l'autre, ces extrémités formant alors des sortes de crochets adaptés à se clipper à la face arrière 93 de la fiche d'interface 90.

On observe sur la figure 8 que les bras 81, 83 pourront s'étendre non pas dans l'axe l'un de l'autre comme c'est le cas sur la figure 6, mais plutôt parallèlement l'un à l'autre, le long de la partie principale 43 du corps 41 de la cosse 40.

En conclusion, la cosse 40 peut être utilisée sur tout type de véhicule automobile, quel que soit le nombre d'antennes équipant ce dernier. Elle permet d'assurer un pré-maintien des câbles coaxiaux 10, 20, 30 dans l'axe des bornes 1A, 1B, 1C lorsque son ouverture 46 est engagée sur le goujon de masse 94. Elle permet surtout d'assurer une bonne fixation et une bonne connexion électrique du blindage de chaque câble coaxial au châssis 5 du véhicule automobile.

## Revendications

1. Ensemble électrique pour un véhicule automobile comportant :
- plusieurs câble coaxiaux (10, 20, 30) destinés à être raccordés à une ou plusieurs antennes d'un véhicule automobile ; et
- une cosse électrique (40) pour un sertissage desdits câbles coaxiaux (10, 20, 30), comportant un corps (41) en matériau électriquement conducteur qui comprend des moyens de raccordement (46) adaptés à raccorder électriquement ledit corps (41) à un point de masse électrique dudit véhicule automobile,
- le premier câble coaxial (10) comportant un blindage (13) dont une partie intermédiaire située à distance des extrémités du premier câble coaxial (10), forme une première portion dénudée (15) ;
- le corps (41) comprenant au moins un premier couple d'oreilles (51, 52) qui sont découpées dans ledit corps (41) et qui sont repliées d'un premier côté (42) dudit corps, pour former un premier fût de sertissage (50) dans lequel ladite première portion dénudée (15) est sertie entre lesdites oreilles (51, 52),
- le deuxième câble coaxial (20, 30) comportant un blindage (13) dont une partie intermédiaire située à distance des extrémités du deuxième câble coaxial (20, 30), forme une deuxième portion dénudée (15) ;
- le corps (41) comprend au moins un deuxième couple d'oreilles (61, 62 ; 71, 72) qui sont découpées dans ledit corps (41) et qui sont repliées du premier côté (42) dudit corps (41) pour former un deuxième fût de sertissage (60, 70) dans lequel ladite deuxième portion dénudée (15) est sertie entre lesdites oreilles (61, 62 ; 71, 72),
- chaque câble coaxial (10, 20, 30) comporte une gaine externe isolante (14) de part et d'autre de sa portion dénudée (15).

2. Ensemble électrique pour un véhicule automobile selon la revendication 1 **caractérisé en ce que** ledit corps (41) comporte, de part et d'autre de l'une première au moins des deux oreilles (51) de chaque couple, deux languettes (55, 56) qui sont découpées dans ledit corps (41) et qui sont repliées contre une gaine isolante externe (14) du câble (10, 20, 30).

3. Ensemble électrique pour un véhicule automobile selon l'une des revendications 1 ou 2, dans laquelle, en position repliée, les oreilles (51, 52) de chaque couple sont repliées selon deux segments (53, 54) parallèles et s'étendent dans deux plans sensiblement parallèles, à 20 degrés près.

4. Ensemble électrique pour un véhicule automobile selon la revendication 3, dans laquelle, en position repliée, lesdites languettes (55, 56) sont repliées selon deux segments d'axes confondus avec l'axe du segment de la première oreille (51).

5. Ensemble électrique pour un véhicule automobile selon l'une des revendications 1 à 4, comportant des moyens de fixation (80) audit véhicule automobile, qui sont découpées dans ledit corps (41).

6. Ensemble électrique pour un véhicule automobile selon l'une des revendications 1 à 5, comportant exactement trois couples d'oreilles (51, 52, 61, 62, 71, 72) qui sont découpées dans ledit corps (41) et qui sont adaptées à être repliées du premier côté (42) dudit corps (41) pour former trois fûts de sertissage (50, 60, 70) destinés à accueillir des portions dénudées (15) de trois câbles coaxiaux (10, 20, 30).

7. Ensemble électrique pour un véhicule automobile selon la revendication 6, dans laquelle les fûts de sertissage (50, 60, 70) adjacents présentent des axes moyens (A50, A60, A70) espacés d'une distance comprise entre 10 et 30 millimètres.

8. Ensemble électrique pour un véhicule automobile selon l'une des revendications 1 à 6 dans lequel lesdits moyens de raccordement (46) comprennent une ouverture (46) découpée dans ledit corps (41), ledit ensemble électrique comportant:
- une partie de fixation et de connexion électrique (90) comportant, d'une part, un goujon de masse (94) à engager au travers de ladite ouverture (46) pour la fixation et la connexion électrique de ladite cosse électrique (40) à cette partie de fixation et de connexion électrique (90), et, d'autre part, des moyens d'assujettissement (97, 98) de ladite cosse (40).

9. Ensemble électrique pour un véhicule automobile selon l'une des revendications 1 à 8, **caractérisé en ce que** ladite cosse électrique (40) est monobloc.

10. Véhicule automobile comportant :
- au moins une antenne adaptée à capter des ondes électromagnétiques pour délivrer un signal électrique ; et
- un ensemble électrique selon l'une des revendications précédentes, permettant de transporter ledit signal électrique dans le véhicule automobile jusqu'à un connecteur électrique (2A).

11. Véhicule automobile selon la revendication 10 comportant un ouvrant en matériau électriquement isolant sur lequel ladite antenne est montée.

## Patentansprüche

1. Elektrische Anordnung für ein Kraftfahrzeug, umfassend:
- mehrere Koaxialkabel (10, 20, 30), die dazu bestimmt sind, an eine oder mehrere Antennen eines Kraftfahrzeugs angeschlossen zu werden; und
- eine elektrische Anschlussklemme (40) zum Crimpen der Koaxialkabel (10, 20, 30), umfassend einen Körper (41) aus elektrisch leitfähigem Material, der Anschlussmittel (46) beinhaltet, die geeignet sind, den Körper (41) elektrisch an einen elektrischen Massepunkt des Kraftfahrzeugs anzuschließen,
- wobei das erste Koaxialkabel (10) eine Abschirmung (13) umfasst, von der ein Zwischenteil, der in einem Abstand von den Enden des ersten Koaxialkabels (10) gelegen ist, einen ersten abisolierten Abschnitt (15) bildet;
- wobei der Körper (41) mindestens ein erstes Paar Laschen (51, 52) beinhaltet, die aus dem Körper (41) herausgeschnitten sind und auf einer ersten Seite (42) des Körpers umgebogen sind, um eine erste Crimphülse (50) zu bilden, in welcher der erste abisolierte Abschnitt (15) zwischen den Laschen (51, 52) gecrimpt wird,
- wobei das zweite Koaxialkabel (20, 30) eine Abschirmung (13) umfasst, von der ein Zwischenteil, der in einem Abstand von den Enden des zweiten Koaxialkabels (20, 30) gelegen ist, einen zweiten abisolierten Abschnitt (15) bildet;
- wobei der Körper (41) mindestens ein zweites Paar Laschen (61, 62; 71, 72) beinhaltet, die aus dem Körper (41) herausgeschnitten sind und auf einer ersten Seite (42) des Körpers (41) umgebogen sind, um eine zweite Crimphülse (60, 70) zu bilden, in welcher der zweite abisolierte Abschnitt (15) zwischen den Laschen (61, 62; 71, 72) gecrimpt wird,
- wobei jedes Koaxialkabel (10, 20, 30) einen isolierenden Außenmantel (14) zu beiden Seiten seines abisolierten Abschnitts (15) umfasst.

2. Elektrische Anordnung für ein Kraftfahrzeug nach Anspruch 1, **dadurch gekennzeichnet, dass** der Körper (41) zu beiden Seiten mindestens einer ersten der beiden Laschen (51) jedes Paares zwei Zungen (55, 56) umfasst, die aus dem Körper (41) herausgeschnitten sind und die gegen einen isolierenden Außenmantel (14) des Kabels (10, 20, 30) umgebogen sind.

3. Elektrische Anordnung für ein Kraftfahrzeug nach einem der Ansprüche 1 oder 2, wobei die Laschen (51, 52) jedes Paares in der umgebogenen Position zu zwei parallelen Segmenten (53, 54) umgebogen sind und sich bis auf 20 Grad genau in zwei im Wesentlichen parallelen Ebenen erstrecken.

4. Elektrische Anordnung für ein Kraftfahrzeug nach Anspruch 3, wobei die Zungen (55, 56) in der umgebogenen Position zu zwei Segmenten umgebogen sind, deren Achsen mit der Achse des Segments der ersten Laschen (51) deckungsgleich sind.

5. Elektrische Anordnung für ein Kraftfahrzeug nach einem der Ansprüche 1 bis 4, umfassend Mittel (80) zur Befestigung an dem Kraftfahrzeug, die aus dem Körper (41) herausgeschnitten sind.

6. Elektrische Anordnung für ein Kraftfahrzeug nach einem der Ansprüche 1 bis 5, umfassend genau drei Paare von Laschen (51, 52, 61, 62, 71, 72), die aus dem Körper (41) herausgeschnitten sind und die dazu angepasst sind, auf der ersten Seite (42) des Körpers (41) umgebogen zu werden, um drei Crimphülsen (50, 60, 70) bilden, die dazu bestimmt sind, abisolierte Abschnitte (15) von drei Koaxialkabeln (10, 20, 30) aufzunehmen.

7. Elektrische Anordnung für ein Kraftfahrzeug nach Anspruch 6, wobei die benachbarten Crimphülsen (50, 60, 70) Mittelachsen (A50, A60, A70) aufweisen, die um einen Abstand zwischen 10 und 30 Millimeter beabstandet sind.

8. Elektrische Anordnung für ein Kraftfahrzeug nach einem der Ansprüche 1 bis 6, wobei die Anschlussmittel (46) eine Öffnung (46) beinhalten, die aus dem Körper (41) herausgeschnitten ist, wobei die elektrische Anordnung Folgendes umfasst:
- ein Teil (90) zur Befestigung und zum elektrischen Verbinden, das zum einen einen Massestift (94), der durch die Öffnung (46) hindurch zum Befestigen und elektrischen Verbinden der elektrischen Anschlussklemme (40) an diesem Teil (90) zur Befestigung und zum elektrischen Verbinden einzuführen ist, und zum anderen Mittel (97, 98) zum Festklammern der Anschlussklemme (40) umfasst.

9. Elektrische Anordnung für ein Kraftfahrzeug nach einem der Ansprüche 1 bis 8, **dadurch gekennzeichnet, dass** die elektrische Anschlussklemme (40) einstückig ist.

10. Kraftfahrzeug, umfassend:
- mindestens eine Antenne, die geeignet ist, elektromagnetische Wellen zu empfangen, um ein elektrisches Signal auszugeben; und
- eine elektrische Anordnung nach einem der vorhergehenden Ansprüche, die es ermöglicht, das elektrische Signal in dem Kraftfahrzeug bis zu einem Steckverbinder (2A) zu transportieren.

11. Kraftfahrzeug nach Anspruch 10, umfassend ein Öffnungselement aus elektrisch isolierendem Material, an dem die Antenne montiert ist.

## Claims

1. Electrical assembly for a motor vehicle, comprising:
- several coaxial cables (10, 20, 30) intended to be connected to one or more antennae of a motor vehicle; and
- an electrical terminal (40) for crimping of said coaxial cables (10, 20, 30), having a body (41) made of electrically conductive material which comprises connection means (46) suitable for electrically connecting said body (41) to an electrical earth point of said motor vehicle,
- the first coaxial cable (10) having a screen (13) of which an intermediate part located at a distance from the ends of the first coaxial cable (10) forms a first stripped portion (15);
- the body (41) comprising at least one first pair of lugs (51, 52) which are cut out of said body (41) and which are bent up on a first side (42) of said body, so as to form a first crimp sleeve (50) in which said first stripped portion (15) is crimped between said lugs (51, 52),
- the second coaxial cable (20, 30) having a screen (13) of which an intermediate part located at a distance from the ends of the second coaxial cable (20, 30) forms a second stripped portion (15);
- the body (41) comprises at least one second pair of lugs (61, 62; 71, 72) which are cut out of said body (41) and which are bent up on a first side (42) of said body (41), so as to form a second crimp sleeve (60, 70) in which said second stripped portion (15) is crimped between said lugs (61, 62; 71, 72),
- each coaxial cable (10, 20, 30) has an external insulating sheath (14) on either side of its stripped portion (15).

2. Electrical assembly for a motor vehicle according to Claim 1, **characterized in that** said body (41) has, on either side of at least a first of the two lugs (51) of each pair, two tabs (55, 56) which are cut out of said body (41) and which are bent up against an external insulating sheath (14) of the cable (10, 20, 30).

3. Electrical assembly for a motor vehicle according to either of Claims 1 and 2, wherein, in the bent-up position, the lugs (51, 52) of each pair are bent up in two parallel segments (53, 54) extending in two substantially parallel planes, to within 20 degrees.

4. Electrical assembly for a motor vehicle according to Claim 3, wherein, in the bent-up position, said tabs (55, 56) are bent up in two segments of axes coinciding with the axis of the segment of the first lug (51).

5. Electrical assembly for a motor vehicle according to one of Claims 1 to 4, comprising attachment means (80) for attaching to said motor vehicle, which are cut out of said body (41).

6. Electrical assembly for a motor vehicle according to one of Claims 1 to 5, comprising exactly three pairs of lugs (51, 52, 61, 62, 71, 72) which are cut out of said body (41) and which are designed to be bent up on the first side (42) of said body (41) so as to form three crimp sleeves (50, 60, 70) intended to accommodate stripped portions (15) of three coaxial cables (10, 20, 30).

7. Electrical assembly for a motor vehicle according to Claim 6, wherein the adjacent crimp sleeves (50, 60, 70) have mean axes (A50, A60, A70) spaced apart by a distance comprised between 10 and 30 millimetres.

8. Electrical assembly for a motor vehicle according to one of Claims 1 to 6, wherein said connecting means (46) comprise an opening (46) cut out of said body (41), said electrical assembly comprising:
- an electrical connection and attachment part (90) comprising, at one end, an earth stud (94) for engaging through said opening (46) to electrically connect and attach said electrical terminal (40) to this electrical connection and attachment part (90), and, at the other end, harnessing means (97, 98) for harnessing said terminal (40).

9. Electrical assembly for a motor vehicle according to one of Claims 1 to 8, **characterized in that** said electrical terminal (40) is in one piece.

10. Motor vehicle comprising:
- at least one antenna designed to capture electromagnetic waves to deliver an electrical signal; and
- an electrical assembly according to one of the preceding claims, for transporting said electrical signal in the motor vehicle to an electrical connector (2A).

11. Motor vehicle according to Claim 10, comprising an opening leaf made of electrically insulating material on which said antenna is mounted.
